Europäisches Patentamt

European Patent Office

Office européen des brevets

(19)

(11) EP 1 338 626 A1

(12) EUROPEAN PATENT APPLICATION
published in accordance with Art. 158(3) EPC

(43) Date of publication:
27.08.2003 Bulletin 2003/35

(51) Int Cl.⁷: C08L 77/00, C08K 3/10

(21) Application number: 01961185.4

(86) International application number:
PCT/JP01/07450

(22) Date of filing: 30.08.2001

(87) International publication number:
WO 02/044277 (06.06.2002 Gazette 2002/23)

(84) Designated Contracting States:
AT BE CH CY DE DK ES FI FR GB GR IE IT LI LU
MC NL PT SE TR
Designated Extension States:
AL LT LV MK RO SI

(30) Priority: 01.12.2000 JP 2000366434

(71) Applicants:
• KANEBO, LTD.
Tokyo 131-0031 (JP)

• Kanebo Gohsen, Ltd.
Osaka-shi, Osaka 530-0001 (JP)

(72) Inventor: TOMITA, Hitoshi
Hofu-shi, Yamaguchi 747-0823 (JP)

(74) Representative:
Reinhard - Skuhra - Weise & Partner GbR
Postfach 44 01 51
80750 München (DE)

(54) MOLDED RESIN FOR RADIATION SHIELDING

(57) Providing a non-lead-based resin-molded product for radiation shield, as produced by melt molding a thermoplastic resin composition containing a polyamide resin and a tungsten powder in a plate form, where the tungsten powder characteristically contains tungsten metal at 95 % by weight or more.

EP 1 338 626 A1

**Description**

Technical Field

The present invention relates to a resin-molded product for radiation shield. More specifically, the invention relates not only to a shielding material for radiotherapy but also to a radiation shielding material in the field of atomic energy and a resin-molded product for radiation shield, which is for use in the field of radiation shield for industrial and medical CT scanning and the like.

Background of the Invention

In case of using radiation in the field of medicine, it is required to prevent damages of normal cells and exposure thereof at a level more than necessary, by shielding the normal cells from radiation generated from radiation generators and by irradiation of radiation at a required level only on an intended site for radiotherapy and measurement without any irradiation on sites never requiring any irradiation of radiation. Because the irradiation only on a site as a subject for the irradiation of radiation involves much difficulty, however, shielding materials are used for shielding sites except for the site requiring the irradiation, from radiation.

Additionally, paramedical staffs operating radiation generators are shielded with shielding blocks because they are directly exposed to radiation generated from radiation generators.

Traditionally, lead has been used as such radiation shielding material. A method has existed, including preparing a casting mold so as to prepare a given shape and casting and molding lead melted under heating at a melting point or more in the casting mold. Additionally, a method has existed alike, including preparing a lead sphere at a diameter of about several mm and pouring the resulting sphere into a chase prepared in a given shape.

So as to recover a given shape, however, these methods are very costly because of the melting of lead, the preparation of the casting mold therefor and the like. Additionally, blade clogging readily occurs during cutting, so that the post-processing such as cutting involves difficulty. Furthermore, the mechanical strength is so low that deformation readily occurs. Further, lead is now causing environmental pollution during disposal, disadvantageously, so that the resulting shielding material may potentially draw social concerns during use.

Additionally, a lead alloy with a low melting point as prepared from lead disadvantageously involves the generation of toxic cadmium gas, when melted under heating for casting.

Disclosure of the Invention

It is an object of the invention to overcome the problems of the related art and provide a non-lead-based resin-molded product for radiation shield.

More specifically, the invention relates to a resin-molded product for radiation shield, as prepared by melting and molding a thermoplastic resin composition containing a polyamide resin and a tungsten powder into a plate form, where the tungsten powder characteristically contains tungsten metal at a content of 95 % by weight or more.

Best Mode for Carrying out the Invention

The polyamide resin for use in accordance with the invention is a resin with intramolecular amide bonds. The polyamide resin has good wettability with the metal per se, high mechanical strength, abrasion resistance and chemical resistance and sufficient durability against radiation.

Specifically, the polyamide resin includes for example nylon 6, nylon 66, nylon 12, nylon 11, nylon 46, nylon 6T and polyamide elastomer. In terms of thermoresistance and moldability, preference is given to nylon 6, nylon 66 and nylon 12.

Nylon 6 for use in accordance with the invention is a polyamide recovered by the ring opening polymerization of ε-caprolactam or the polymerization of aminocarboxylic acid.

The copolymerizable component includes for example amino acids such as 11-aminoundecanoic acid, 12-aminododecanoic acid, and p-aminomethylbenzoic acid; lactams such as $\bar{\omega}$-lauryl lactam, and diamines such as hexamethylenediamine, undecamethylenediamine, dodecamethylenediamine, 2,2,4-trimethylhexamethylenediamine, 2,4,4-trimethylhexamethylenediamine, 5-methylnonamethylenediamine, m-xylylenediamine, p-xylylenediamine, 1,3-bis(aminomethyl)cyclohexane, 1,4-bis(aminomethyl)cyclohexane, 1-amino-3-aminomethyl-3,5,5-trimethylcyclohexane, bis(3-methyl-4-aminocyclohexyl)methane, 2,2-bis(4-aminocyclohexyl)propane, bis(aminopropyl)piperazine, and aminoethylpiperazine; and dicarboxylic acids such as adipic acid, suberic acid, azelaic acid, sebacic acid, dodecanoic acid, terephthalic acid, isophthalic acid, 2-chloroterephthalic acid, 2-methylterephthalic acid, 5-methylisophthalic acid, 5-sodium sulfoisophthalic acid, hexahydroterephthalic acid, hexahydroisophthalic acid and diglycolic acid.

As the production method, known methods can be used. In other words, when ε-caprolactam is used, water and an additive if necessary are charged in a polymerization can for promoting the ring opening of ε-caprolactam and subsequently progressing condensation polymerization in inert gas stream at atmospheric pressure or under reduced pressure. In case that aminocarboxylic acid is used, additionally, dehydration condensation is progressed under heating. The polymerization degree is not specifically limited. At a concentration of 1 g/dl, nylon 6 with a relative viscosity within a range of 2 to 4 as produced using 96% sulfuric acid is preferable.

Specific examples of nylon 12 for use in accordance with the invention include nylon 12 recovered from $\bar{\omega}$-laurolactam and 12-aminododecanoic acid. Alternatively, nylon 12 recovered via the use of the copolymerization components described above may be satisfactory. As the production method, known methods can be used, as in the case of nylon 6. The polymerization degree is not specifically limited. A relative viscosity of 1.2 to 2.0 at a concentration of 0.5 % by weight as produced using m-cresol is preferable.

Specific examples of nylon 66 for use in accordance with the invention include nylon 66 recovered from adipic acid and hexamethylenediamine. Alternatively, nylon 66 recovered via the use of the copolymerization components described above may be satisfactory. As the production method, known methods can be used, as in the case of nylon 6. The polymerization degree is not specifically limited. A relative viscosity of 1.2 to 2.0 at a concentration of 0.5 % by weight as produced using m-cresol is preferable.

Importantly, the tungsten powder for use in accordance with the invention contains tungsten metal at 95 % by weight or more therein. In case that the tungsten metal contained in the tungsten powder is at 95 % by weight or less, the radiation shielding potency is insufficient. Herein, the tungsten metal means the pure metal with no content of oxides. In case that the content of the tungsten metal is within the range, additionally, the tungsten powder may satisfactorily contain copper, nickel, iron, tungsten oxide and the like.

Further, the content of the tungsten metal in accordance with the invention is calculated by separating the tungsten powder from the residue of the burned resin composition on the basis of the difference in specific gravity, measuring tungsten and elements other than tungsten in the tungsten powder by using atomic absorption spectroscopy, emission spectroscopy, fluorescent X ray spectroscopy, ESCA and the like, and calculating the content (% by weight) of the tungsten metal on the basis of the results. In case that tungsten is present in the form of oxides in the tungsten powder, only oxygen is determined by the JIS H1402 method to calculate hexavalent tungsten oxide.

The mean particle size (referred to as particle size hereinafter) of the tungsten powder for use in accordance with the invention is preferably 300 μm or less, more preferably 100 μm or less, and still more preferably 30 μm or less, so that the resulting thermoplastic resin composition can readily pass through the gate of a mold. In case of molding using injection molding method and the like, the thermoplastic resin composition hardly passes through the gate of a mold as the particle size of the tungsten powder is larger, so that the moldability thereof is deteriorated. As the particle size of the tungsten powder is smaller, alternatively, the total surface area of the tungsten powder is larger, so that a small amount of the polyamide resin hardly covers the surface of the tungsten powder completely. Therefore, the particle size of the tungsten powder is preferably 2 μm or more, more preferably 3 μm or more.

Thus, the particle size of the tungsten powder is appropriately selected, in terms of the moldability and coverability. So as to allow the resulting thermoplastic resin composition to have both the moldability and coverability, for example, the particle size is preferably 2 to 100 μm, more preferably 3 to 30 μm.

Furthermore, the tungsten powder for use in accordance with the invention is preferably used after coupling treatment so as to enhance the affinity with the polyamide resin. As the coupling agent, use is made of titanate series, aluminium series and silane series. In accordance with the invention, silane series have the highest effect on the enhancement of the affinity.

The content of the polyamide resin in the thermoplastic resin composition as a material of the resin-molded product for radiation shield in accordance with the invention is preferably 2 % by weight or more. In case that the content of the polyamide resin is 2 % by weight or less, injection molding as one of the production methods of the molded product is difficult.

The content of the tungsten powder in the thermoplastic resin composition composing the resin-molded product for radiation shield in accordance with the invention is preferably 80 % by weight or more, more preferably 90 % by weight or more. Particularly preferably, the content of the tungsten powder is 93 % by weight or more. In that case, the resulting molded product can exert radiation shieldability superior to that of lead.

Furthermore, non-lead metal powders and non-lead metal compound powders other than tungsten can be added within a range never deteriorating the object of the invention to the thermoplastic resin composition as a material of the resin-molded product for radiation shield in accordance with the invention. The non-lead metal powders for use in accordance with the invention specifically include for example but are not limited to iron, stainless steel, brass, copper, aluminium, nickel, silver, and zinc. The non-lead metal compound powders for use in accordance with the invention specifically include for example but are not limited to iron oxide, copper oxide, aluminium oxide, barium sulfate, zinc oxide, and molybdenum sulfide. Further, one or two or more thereof may appropriately be selected and used, satisfactorily. Particularly, the tungsten powder of itself, a mixture of the tungsten powder and brass powder, or a mixture of the tungsten powder and barium sulfate powder is preferable owing to the high radiation shieldability.

To the thermoplastic resin composition may furthermore be added a nucleating agent, a lubricant, a release agent, an anti-oxidant, a coloring agent, a flame retardant, a weathering stabilizer, a crosslinking agent, a thermoplastic resin (for example, olefin, polyester, a thermoplastic elastomer, ABS and the like) other than the polyamide resin, within a range never deteriorating the object of the invention.

The method for producing the thermoplastic resin composition as a material of the resin-molded product for radiation shield in accordance with the invention is not specifically limited but includes known various methods, for example a method including melting and kneading together the tungsten powder, the polyamide resin and the like, using a uniaxial or biaxial extruder. In case of molding by the injection molding method, in particular, the tungsten powder is preferably dispersed sufficiently in the resin. As a method for increasing the dispersibility, a method is preferable, including preliminarily dry blending the polyamide resin powder, the tungsten powder and the like with a high-speed agitator (Henschel mixer, super-mixer and the like), and subsequently feeding the resulting mixture into a kneader for melt kneading. The enhancement of the dispersibility leads to the enhancement of the shieldability.

For the method for producing the resin-molded product for radiation shield in accordance with the invention, the melt molding of the thermoplastic resin composition recovered by the method is important. By melt molding the pieces generated from the melt molding and cutting, the pieces can be recycled. So as to give radiation shieldability, the thickness of the plate-like molded product is satisfactorily increased. In case that a thicker molded product is to be produced by extrusion molding method or sheet molding method, frequently, void (vacuum void) generates in the resulting molded product. Thus, sufficient shieldability cannot be recovered. Because a larger pressure can be applied by the injection molding method compared with other molding methods, void hardly emerges in the molded product. Therefore, the injection molding method is preferable from the respect of the radiation shieldability. For melt molding, in particular, the injection molding method is used for such molding. In case that the injection molding method is selected, further, the melt viscosity of the thermoplastic resin composition of the invention is preferably 10,000 Pa•S or less in terms of moldability, when measured by the flow tester method (the temperature of 280°C and the pressure of 15.7 GPa).

In case that the injection molding method is selected and the shieldability of the resulting molded product is insufficient, then, the mold may be prepared again or the mold may be modified to have a larger thickness, which requires cost and time. In case that the molded product is to have a larger thickness, void may potentially emerge in the molded product. In such case, a plate-like molded product with a given thickness is once prepared, and then, the molded product is overlaid together until the resulting overlaid product can have the required shieldability. In terms of moldability, the plate has a thickness of 1 mm or more. So as to suppress void emergence, the thickness is preferably 8 mm or less. The molded product is fixed together by a method with volts and nuts or a method including solubilizing the surface of the molded product using a solvent (formic acid, etc.) for the polyamide resin and subsequently attaching the molded product onto the solubilized surface, or the like. Furthermore, the molded product of the invention can be readily cut with saw and the like. Thus, the molded product can be cut in conformity with a required shape, for use.

Examples

The invention is now described below in Examples. Herein, the radiation shieldability was assessed by the following method.

By arranging a shadow tray on the gantry head of a linear accelerator and sequentially mounting samples ($85 \times 85 \times 6$) on the tray, transmission X ray was counted. The effective energy of the radiation was 9.2 MV, while the geometric arrangement was as follows: SCD = 100 cm; the distance from the dosimeter to the shadow tray surface was 35 cm; the field size was $60 \times 60$; the solid water phantom depth was 5 cm after calibration.

(Method for silane-based coupling treatment)

As a silane-based coupling agent, γ-(2-aminoethyl)aminopropyltrimethoxysilane (SH6020; manufactured by Toray Dow Corning Silicone Co., Ltd.) was used. To the tungsten powder agitated in a mixer tank with a high-speed agitation wing (super mixer) was dropwise added 0.3 % by weight of the silane-based coupling agent. Then, the mixture was continuously agitated, until the temperature inside the tank reached 120°C. After subsequent cooling, the resulting tungsten powder was used as a tungsten powder processed with the silane-based coupling treatment.

Examples 1 to 3

To nylon 6 (recovered by pulverizing MC100L manufactured by Kanebo Gohsen Ltd.; Example 1), nylon 66 (recovered by pulverizing Leona 1300 manufactured by Asahi Kasei Co., Ltd.; Example 2), and nylon 12 (recovered by pulverizing Diamide L1640 manufactured by Daicelhuls Ltd.; Example 3) was individually added a tungsten powder of a mean particle size of 13 μm after preliminary silane-based coupling treatment (manufactured by Tokyo Tungsten, Co., Ltd.; the composition is as follows) at compositions shown in Table 1, followed by preliminary mixing in a mixer tank with a high-speed agitation wing (super mixer) and melt kneading with a uniaxial extruder of a screw diameter of 25 mm, to recover pellets. Using the pellets, molded products of 85 mm × 85 mm at a thickness of 6 mm were recovered and subjected to the assessment of radiation shieldability. Further, two sheets or three sheets were overlaid together, and holes were opened in the four corners thereof, which were then fixed with volts and nuts, for the assessment of radiation shieldability. The results are shown in Table 1.

(Composition of tungsten powder)

99.87 % tungsten metal
0.02 % iron
0.01 % molybdenum
0.02 % oxygen (0.1 % tungsten oxide)
Metals other than tungsten were measured by atomic absorptiometry, while only oxygen in the tungsten oxide was determined by the JIS H1402 method to calculate hexavalent tungsten oxide.

Table 1

|  | Resin composition | Shieldability (%) | | |
|---|---|---|---|---|
|  |  | Thickness = 6 mm | Thickness = 12 mm | Thickness = 18 mm |
| Example 1 | nylon 6: 3 % by weight (wt %) tungsten powder: 97 wt % | 30 | 49 | 64 |
| Example 2 | nylon 66: 6 wt % tungsten powder: 94 wt % | 28 | 48 | 62 |
| Example 3 | nylon 12: 3 wt % tungsten powder: 97 wt % | 29 | 48 | 63 |
| Comparative Example 1 | lead: 100 % | 27 | 46 | 60 |
| Comparative Example 2 | Low-melting lead alloy | 26 | 44 | 58 |

Comparative Examples 1 and 2

The radiation shieldability of 6-mm-thick lead (Comparative Example 1) and that of a low-melting lead alloy (tin + cadmium; Comparative Example 2) were assessed. Furthermore, two sheets or three sheets were overlaid together. After the four corners were fixed with a clamp, the resulting overlaid sheets were subjected to the assessment of radiation shieldability. The results are shown in Table 1.

Comparative Example 3

The nylon 66 used in Example 2 and a tungsten powder (manufactured by Shin Nippon Metal Co., Ltd.; W-6Ni-4Cu (containing nickel at 6 % by weight and copper at 4 % by weight and having a true specific gravity of 17.2)) were blended together at 6 % by weight and 94 % by weight, respectively. The resulting blend was processed by the same method as in Example 1, to recover a plate-like molded product, which was then subjected to the assessment of radiation shieldability. Consequently, the shieldability of one sheet (6-mm thick) was 25 %; the shieldability of two sheets (12-mm thick) was 42 %; and the shieldability of three sheets (18-mm thick) was 55 %.

Comparative Example 4

The nylon 6 used in Example 1 and a tungsten powder (manufactured by Shin Nippon Metal Co., Ltd.; containing tungsten oxide at 8 % by weight and having a true specific gravity of 17.0)) were blended together at 6 % by weight and 94 % by weight, respectively. The resulting blend was processed by the same method as in Example 1, to recover a plate-like molded product, which was then subjected to the assessment of radiation shieldability. Consequently, the shieldability of one sheet (6-mm thick) was 24 %; the shieldability of two sheets (12-mm thick) was 41 %; and the shieldability of three sheets (18-mm thick) was 54 %.

As described above, in accordance with the invention, the resin-molded product for radiation shield has shieldability at the same level as or superior to that of lead, so the resin-molded product can effect shielding from radiation without handling of toxic lead in clinical practice. When higher radiation shieldability is required, furthermore, the plate-like molded product is overlaid together to get required shieldability. Because the material of the resin-molded product is a polyamide resin, the resin-molded product has thermoresistance and chemical resistance, and sufficient durability against radiation.

Industrial Applicability

As described above, the radiation shieldability at the same level as or superior to that of lead can be recovered in accordance with the invention. Therefore, the resin-molded product can be used as an alternative of lead or lead alloy materials. By additional overlaying, the radiation shieldability can be enhanced. Further, the resin-molded product can be recycled, advantageously, by melt molding the pieces generated from melt molding and cutting for regeneration. After use, further, the resin-molded product can be recovered and pulverized, for another melt molding, to regenerate the resin-molded product in a given shape.

**Claims**

1. A resin-molded product for radiation shield, as produced by melt molding a thermoplastic resin composition containing a polyamide resin and a tungsten powder in a plate form, where the tungsten powder characteristically contains tungsten metal at 95 % by weight or more.

2. A resin-molded product for radiation shield according to claim 1, where the polyamide resin contains at least one polymer selected from the group consisting of nylon 6, nylon 66 and nylon 12.

3. A resin-molded product for radiation shield according to any of claims 1 and 2, where the melting molding is done by injection molding.

## INTERNATIONAL SEARCH REPORT

| International application No. |
| --- |
| PCT/JP01/07450 |

| A. CLASSIFICATION OF SUBJECT MATTER |
| --- |
| Int.Cl⁷ C08L77/00, C08K3/10 |

According to International Patent Classification (IPC) or to both national classification and IPC

| B. FIELDS SEARCHED |
| --- |
| Minimum documentation searched (classification system followed by classification symbols)<br>    Int.Cl⁷ C08L77/00, C08K3/10 |

Documentation searched other than minimum documentation to the extent that such documents are included in the fields searched
    Jitsuyo Shinan Koho          1926-1996     Toroku Jitsuyo Shinan Koho   1994-2001
    Kokai Jitsuyo Shinan Koho   1971-2001     Jitsuyo Shinan Toroku Koho   1996-2001

Electronic data base consulted during the international search (name of data base and, where practicable, search terms used)
    WPI/L

| C. DOCUMENTS CONSIDERED TO BE RELEVANT | | |
| --- | --- | --- |
| Category* | Citation of document, with indication, where appropriate, of the relevant passages | Relevant to claim No. |
| PX | JP 2001-083288 A (Kabushiki Kaisha Hanshin Gijutsu Kenkyusho),<br>30 March, 2001 (30.03.01),<br>Claims; Par. Nos. [0001], [0010], [0013] to [0014]<br>(Family: none) | 1-3 |
| PA | JP 2000-336280 A (Kishimoto Sangyo Co., Ltd.),<br>05 December, 2000 (05.12.00),<br>Claims; Par. No. [0010]   (Family: none) | 1-3 |
| A | JP 10-158507 A (Sumitomo Bakelite Company, Limited),<br>16 June, 1998 (16.06.98),<br>Claims; Par. No. [0006]   (Family: none) | 1-3 |
| A | JP 61-097356 A (Seiko Epson Corporation),<br>15 May, 1986 (15.05.86),<br>Claims; page 2, upper right column, lines 3 to 11<br>(Family: none) | 1-3 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 November, 2001 (19.11.01) | Date of mailing of the international search report<br>    27 November, 2001 (27.11.01) |
| --- | --- |
| Name and mailing address of the ISA/<br>    Japanese Patent Office | Authorized officer |
| Facsimile No. | Telephone No. |

Form PCT/ISA/210 (second sheet) (July 1992)